# EUROPÄISCHE PATENTSCHRIFT

(11) **EP 4 112 348 B1**
(45) Veröffentlichungstag und Bekanntmachung des Hinweises auf die Patenterteilung: **25.09.2024**
(21) Anmeldenummer: 21182879.3
(22) Anmeldetag: 30.06.2021
(51) Int. Cl.: B60J 7/04, B60J 7/16

(54) **NUTZFAHRZEUG MIT PLANENAUFBAU UMFASSEND EINE HÖHENVERSTELLBARE ECKRUNGE MIT SENSOR**
COMMERCIAL VEHICLE WITH TARPAULIN STRUCTURE COMPRISING A HEIGHT-ADJUSTABLE CORNER BRACKET WITH SENSOR
VÉHICULE UTILITAIRE À STRUCTURE PLANE COMPRENANT UNE RANCHE D'ANGLE RÉGLABLE EN HAUTEUR POURVU DE CAPTEUR

(43) Veröffentlichungstag der Anmeldung: 04.01.2023
(73) Patentinhaber: Schmitz Cargobull AG, 48341 Altenberge (DE)
(72) Erfinder: Heedemann, Jonas, 49549 Ladbergen (DE); Richert, Dennis, 48282 Emsdetten (DE)
(74) Vertreter: Cohausz & Florack

(56) Entgegenhaltungen:
- WO-A1-2010/112467
- DE-A1- 102012 023 716
- DE-A1- 102014 111 765
- DE-U1- 9 113 503

## Beschreibung

### Gebiet

Beispielhafte Ausführungsformen der Erfindung betreffen ein Nutzfahrzeug mit Planenaufbau umfassend eine höhenverstellbare Eckrunge mit Sensor.

### Zusammenfassung einiger beispielhafter Ausführungsformen der Erfindung

Im Stand der Technik sind Nutzfahrzeuge mit Planenaufbauten mit höhenverstellbaren Dächern bekannt. Durch eine Höhenverstellung des Daches ändern sich die (Fahr-) Eigenschaften eines solchen Nutzfahrzeugs. Eine Aufgabe der vorliegenden Erfindung ist es somit, eine Lösung bereitzustellen, um eine Höhenstellung des Daches erfassen zu können, damit die Höhen und beispielsweise die damit einhergehenden veränderten (Fahr-)Eigenschaften automatisch berücksichtigt werden können.

Gemäß der Erfindung wird ein Nutzfahrzeug mit einem Planenaufbau offenbart, wobei der Planenaufbau ein Dach, einen an einer Längsseite des Planenaufbaus vorgesehenen Längsholm des Dachs und wenigstens eine höhenverstellbare Eckrunge umfasst, wobei die höhenverstellbare Eckrunge den Längsholm des Dachs abstützt und derart höhenverstellbar ausgebildet ist, dass sie wenigstens in einer unteren Höhenstellung und in einer oberen Höhenstellung feststellbar ist, und wobei in der höhenverstellbaren Eckrunge ein Sensor angeordnet ist, der eingerichtet ist, um zu erfassen, ob die höhenverstellbare Eckrunge sich in der unteren Höhenstellung oder der oberen Höhenstellung befindet.

Unter einem Nutzfahrzeug soll insbesondere ein Lastkraftwagen, ein Anhänger oder ein Sattelauflieger verstanden werden. Der Planenaufbau für ein solches Nutzfahrzeug ist insbesondere für den Transport von Gütern, vorzugsweise Stückgütern, im öffentlichen Straßenverkehr vorgesehen.

Zum Beispiel sind die Seitenwände des Planenaufbaus und bedarfsweise auch das Dach des Planenaufbaus durch wenigstens eine jeweilige Plane verschlossen. Ferner ist die Stirnwand beispielsweise als feste Wand ausgebildet, während die Rückwand durch zwei Flügeltüren gebildet werden kann, um den Laderaum bedarfsweise von hinten zu beladen. Wenn eine Seitenwandplane entlang der Seitenwand verschoben werden kann, spricht man auch von einem sogenannten Curtainsider.

Neben dem oben offenbarten Längsholm weist das Dach beispielsweise zumindest einen weiteren Längsholm auf. Die Längsholme sind beispielsweise seitlich angeordnet und sind unter Bildung einer Rahmenstruktur quer zum Nutzfahrzeug über Spriegel miteinander verbunden. Diese Rahmenstruktur trägt dann die das Dach verschließende Dachplane, wobei die Rahmenstruktur durch Rungen getragen wird. Die Eckrungen befinden sich an den vorderen beiden Ecken und den hinteren beiden Ecken des Nutzfahrzeugs, während sich die Mittelrungen an den beiden Längsseiten des Planenaufbaus zwischen den beiden jeweils zugeordneten Eckrungen befinden. Zum Be- und Entladen des Planenaufbaus können die Mittelrungen aus einer Gebrauchsstellung, in der die Mittelrungen das Dach gegenüber dem Boden abstützen, in eine Nichtgebrauchsstellung und wieder zurück verstellt werden. In der Nichtgebrauchsstellung können die Mittelrungen entlang des Längsholms nach vorne und nach hinten verschoben werden, so dass sich eine breite Öffnung an der jeweiligen Seitenwand bildet, über die Ladung einfach be- oder entladen werden kann. Die vorderen Eckrungen können dabei einen Teil der Stirnwand und die hinteren Eckrungen einen Teil der Rückwand bzw. des Rückwandportals bilden, das die rückwärtigen Flügeltüren trägt und das durch die Flügeltüren verschlossen werden kann. Zumindest ein Teil der Eckrungen und bedarfsweise der Mittelrungen können höhenverstellbar ausgebildet sein, um zumindest einen Teil des Dachs absenken zu können. Wie unten im Detail offenbart, umfassen die höhenverstellbaren Rungen einen Rungengrundkörper und einen zumindest teilweise in dem Rungengrundkörper aufgenommenen Rungenschiebling, wobei der Rungenschiebling gegenüber dem Rungengrundkörper zur Veränderung der Höhenstellung der Runge von der unteren Höhenstellung zu der oberen Höhenstellung nach oben verschiebbar ist, und wobei der verschiebbare Rungenschiebling zumindest in der unteren Höhenstellung und in der oberen Höhenstellung feststellbar ist. Zum Beispiel können die hinteren Eckrungen höhenverstellbar ausgebildet sein, um ein aerodynamisch vorteilhaftes Absenken des hinteren Teils des Dachs zu ermöglichen, z.B. wenn der Planenaufbau nicht vollständig beladen ist. Der oben offenbarte Sensor ist dann in einer der höhenverstellbaren Eckrungen angeordnet. Es kann auch vorgesehen sein, dass ein solcher Sensor in jeder der höhenverstellbaren Eckrungen angeordnet ist.

Dabei soll der oben offenbarte Sensor als in einer der höhenverstellbaren Eckrunge angeordnet verstanden werden, wenn er zumindest teilweise in einem durch die Eckrunge gebildeten Raum angeordnet (z.B. befestigt und/oder montiert) ist. Der Raum liegt beispielsweise zumindest teilweise im Inneren der Eckrunge und/oder wird zumindest teilweise durch die Eckrunge begrenzt. Zum Beispiel kann es sich um einen Hohlraum im Inneren der Eckrunge handeln. Unter Anordnen soll in diesem Zusammenhang beispielsweise das Befestigen und/oder Montieren des Sensors (z.B. durch eine Schraub- und/oder Klebeverbindung) verstanden werden.

Dass der Sensor eingerichtet ist, ist, um zu erfassen, ob die höhenverstellbare Eckrunge sich in der unteren Höhenstellung oder der oberen Höhenstellung befindet, soll beispielsweise derart verstanden werden, dass der Sensor eingerichtet ist, um zu erfassen, ob die höhenverstellbare Eckrunge sich in einer ersten Höhenstellung der beiden Höhenstellungen (z.B. in der unteren Höhenstellung) befindet oder ob die höhenverstellbare Eckrunge sich nicht in der ersten Höhenstellung der beiden Höhenstellungen (z.B. in der unteren Höhenstellung) befindet. Zum Beispiel wird dann davon ausgegangen, dass die höhenverstellbare Eckrunge sich (i) in der ersten Höhenstellung der beiden Höhenstellungen (z.B. in der unteren Höhenstellung) befindet, wenn der Sensor erfasst, dass die höhenverstellbare Eckrunge sich in der ersten Höhenstellung befindet, oder (ii) in der zweiten Höhenstellung der beiden Höhenstellungen (z.B. in der oberen Höhenstellung) befindet, wenn der Sensor erfasst, dass die höhenverstellbare Eckrunge sich nicht in der ersten Höhenstellung befindet.

Es versteht sich, dass der Sensor alternativ auch derart eingerichtet sein kann, dass der Sensor für jede der Höhenstellungen, in der die höhenverstellbare Eckrunge feststellbar ist, erfassen kann, dass die höhenverstellbare Eckrunge sich in der jeweiligen Höhenstellung befindet. Dies ist insbesondere dann vorteilhaft, wenn die höhenverstellbare Eckrunge neben der unteren Höhenstellung und der oberen Höhenstellung auch noch in einer oder mehreren weiteren Höhenstellung zwischen der unteren Höhenstellung und der oberen Höhenstellung feststellbar ist.

Weitere Vorteile der offenbarten Erfindung werden nachfolgend anhand beispielhafter Ausführungsformen des offenbarten Nutzfahrzeugs beschrieben.

In beispielhaften Ausführungsformen ist zumindest ein Teil des Dachs in der unteren Höhenstellung der höhenverstellbaren Eckrunge um wenigstens 400mm gegenüber der oberen Höhenstellung der höhenverstellbaren Eckrunge abgesenkt.

Zum Beispiel können die hinteren Eckrungen derart höhenverstellbar ausgebildet sein, dass sich der hintere Teil des Dachs in der unteren Höhenstellung der hinteren Eckrungen um wenigsten 400mm gegenüber der oberen Höhenstellung der hinteren Eckrungen und gegenüber dem vorderen Teil des Dachs absenkt. In der oberen Höhenstellung ohne Absenken des Dachs steht demnach möglichst viel Ladevolumen und/oder eine möglichst große Ladehöhe in dem Planenaufbau des Nutzfahrzeugs zur Verfügung. In der unteren Ladestellung wird dagegen der Luftwiderstand des Nutzfahrzeugs durch das Absenken des hinteren Teils des Dachs verringert. Dies ist demnach vorteilhaft, um ein aerodynamisch vorteilhaftes Absenken des hinteren Teils des Dachs zu ermöglichen, z.B. wenn der Planenaufbau nicht vollständig beladen ist.

Erfindungsgemäß umfasst die höhenverstellbare Eckrunge einen Rungengrundkörper und einen zumindest teilweise in dem Rungengrundkörper aufgenommenen Rungenschiebling, wobei der Rungenschiebling gegenüber dem Rungengrundkörper zur Veränderung der Höhenstellung der höhenverstellbaren Eckrunge von der unteren Höhenstellung zu der oberen Höhenstellung nach oben verschiebbar ist, und wobei der verschiebbare Rungenschiebling zumindest in der unteren Höhenstellung und in der oberen Höhenstellung feststellbar ist. Zum Beispiel ist das obere Ende des Rungenschieblings gleichzeitig auch das obere Ende der Eckrunge, so dass die Höhenstellung der Eckrunge der Höhenstellung des Rungenschieblings entspricht. Es versteht sich, dass sowohl der Rungengrundkörper als auch der Rungenschiebling jeweils einteilig oder mehrteilig ausgebildet sein können. Dabei beschreibt der Rungengrundkörper beispielsweise den Teil oder die miteinander verbundenen Teile der höhenverstellbaren Eckrunge, dessen/deren unteres Ende mit dem Boden des Planenaufbaus verbunden oder verbindbar ist; und der Rungenschiebling beschreibt beispielsweise den Teil oder die miteinander Teile der höhenverstellbaren Eckrunge, dessen/deren oberes Ende mit dem Längsholm des Dachs verbunden oder verbindbar ist und der/die zumindest teilweise in dem Rungengrundkörper aufgenommenen und zwischen der unteren Höhenstellung und der oberen Höhenstellung verschiebbar ist/sind.

Zum Verschieben des Rungenschieblings in dem Rungengrundkörper kann ein manueller Bedienmechanismus, zum Beispiel ein Kurbelmechanismus oder eine hydraulische Handpumpe, vorgesehen sein.

Damit der Rungenschiebling in der unteren Höhenstellung und der oberen Höhenstellung feststellbar ist, kann ein Feststellmechanismus (z.B. ein Rastmechanismus oder eine Steckbolzensicherung) vorgesehen sein, der den Rungenschiebling in der unteren Höhenstellung und in der oberen Höhenstellung gegenüber dem Rungengrundkörper festhält. Zum Beispiel können an dem Rungengrundkörper Rastnasen vorgesehen sein, die jeweils in korrespondierende Ausnehmungen des Rungenschieblings eingreifen und den Rungenschiebling festhalten, wenn sich der Rungenschiebling in einer jeweiligen Höhenstellung der unteren Höhenstellung oder der oberen Höhenstellung befindet. Alternativ oder zusätzlich könnte der Rungenschiebling auch durch einen Steckbolzen in der der unteren Höhenstellung oder der oberen Höhenstellung an dem Rungengrundkörper gesichert (d.h. festgehalten) werden.

Der Sensor ist erfindungsgemäß eingerichtet, um zu erfassen, ob der Rungenschiebling sich in der unteren Höhenstellung oder der oberen Höhenstellung befindet. Zu diesem Zweck kann der Sensor beispielsweise eingerichtet sein, um zu erfassen, ob der Rungenschiebling sich in einer ersten der beiden Höhenstellungen (z.B. in der unteren Höhenstellung) befindet oder ob der Rungenschiebling sich nicht in der ersten der beiden Höhenstellungen (z.B. in der unteren Höhenstellung) befindet. Zum Beispiel wird dann bestimmt, dass die höhenverstellbare Eckrunge sich (i) in der ersten Höhenstellung der beiden Höhenstellungen (z.B. in der unteren Höhenstellung) befindet, wenn der Sensor erfasst, dass der Rungenschiebling sich in der ersten Höhenstellung befindet, oder (ii) in der zweiten Höhenstellung der beiden Höhenstellungen (z.B. in der oberen Höhenstellung) befindet, wenn der Sensor erfasst, dass der Rungenschiebling sich nicht in der ersten Höhenstellung befindet.

Erfindungsgemäß umfasst der Sensor einen am Rungengrundkörper angeordneten Näherungsschalter. Unter einem solchen Näherungsschalter soll ein Sensor verstanden werden, der zum Beispiel eine Annäherung des Rungenschieblings oder eines an dem Rungenschiebling angeordneten Näherungselelements (z.B. eines Dauermagneten) erfassen kann. Der Näherungsschalter kann beispielsweise derart eingerichtet (z.B. kalibriert) werden, dass er eine Annäherung des Rungenschieblings oder eines an dem Rungenschiebling angeordneten Näherungselelements (z.B. eines Dauermagneten) erfasst, wenn die Oberfläche des Rungenschieblings oder des Näherungselelements sich dem Näherungsschalter auf einen vorbestimmten (z.B. kalibrierten) Abstand oder den kürzest möglichen Abstand annähert. Die Verwendung des Näherungsschalters ist zum einen vorteilhaft, weil der Näherungsschalter ortsfest (d.h. unbeweglich) an einer Montageposition an dem Rungengrundkörper angeordnet werden kann. Zum anderen kann der Näherungsschalter eine Annäherung berührungsfrei erfassen. Dementsprechend ist der Näherungsschalter keiner mechanischen Beanspruchung ausgesetzt.

Beispiele für einen solchen Näherungsschalter sind ein magnetischer Näherungsschalter, ein kapazitiver Näherungsschalter oder ein induktiver Näherungsschalter. Ein induktiver oder ein kapazitiver Näherungsschalter kann beispielsweise eingerichtet sein, eine Annäherung des Rungenschieblings zu erfassen, indem er die Änderung einer Induktivität oder Kapazität aufgrund der Annäherung des Rungenschieblings erfasst. Ein magnetischer Näherungsschalter (sog. Magnetschalter) kann beispielsweise eingerichtet sein, eine Annäherung des Rungenschieblings zu erfassen, in dem er die Änderung eines magnetischen Felds aufgrund der Annäherung eines an dem Rungenschiebling angeordneten Dauermagneten erfasst.

Der Näherungsschalter kann beispielsweise eingerichtet sein:
- eine Annäherung des verschiebbaren Rungenschieblings zu erfassen, wenn sich der verschiebbare Rungenschiebling in der unteren Höhenstellung befindet; und/oder
- keine Annäherung des verschiebbaren Rungenschieblings zu erfassen, wenn sich der verschiebbare Rungenschiebling in der oberen Höhenstellung befindet.

Zu diesem Zweck kann die Position des Näherungsschalters (z.B. die ortsfeste Montageposition des Näherungsschalters an dem Rungengrundkörper) beispielsweise derart gewählt sein, dass die Oberfläche des Rungenschieblings oder des Näherungselelements sich dem Näherungsschalter auf den vorbestimmten Abstand oder den kürzest möglichen Abstand annähert, wenn sich der verschiebbare Rungenschiebling in der unteren Höhenstellung befindet.

Zum Beispiel kann die Länge des Rungenschieblings derart gewählt sein, dass:
- das untere Ende des Rungenschieblings sich auf oder unterhalb der Position des Näherungsschalters befindet, wenn sich der verschiebbare Rungenschiebling in der unteren Höhenstellung befindet; und/oder
- das untere Ende des Rungenschieblings sich oberhalb der Position des Näherungsschalters befindet, wenn sich der verschiebbare Rungenschiebling in der oberen Höhenstellung befindet.

Dabei soll unter der Position des Näherungsschalters beispielsweise die oben offenbarte ortsfeste Montageposition des Näherungsschalters an dem Rungengrundkörper verstanden werden. Durch diese Wahl der Länge des Rungenschieblings wird sichergestellt, dass sich die Oberfläche des Rungenschieblings in der unteren Höhenstellung, nicht jedoch in der oberen Höhenstellung dem Näherungsschalter auf den kürzest möglichen Abstand annähert.

Zum Beispiel ist der Näherungsschalter in der unteren Hälfte, insbesondere dem unteren Drittel oder dem unteren Viertel, des Rungengrundkörpers angeordnet. Dabei soll unter (i) der unteren Hälfte oder (ii) dem unteren Drittel oder (iii) dem unteren Viertel des Rungengrundkörpers der Teil des Rungengrundkörpers verstanden werden, der sich vom unteren Ende des Rungengrundkörpers in vertikaler Richtung vertikaler Richtung bis zur Hälfte oder (ii) einem Drittel oder (iii) einem Viertel der Höhe des Rungengrundkörpers erstreckt. Diese Anordnung des Näherungsschalters ist beispielsweise vorteilhaft, um die Verkabelung des Näherungsschalters möglichst kurz ausführen zu können.

Erfindungsgemäß ist der Näherungsschalter zumindest teilweise in einem durch den Rungengrundkörper gebildeten Raum angeordnet sein. Alternativ oder zusätzlich kann die Verkabelung des Näherungsschalters zumindest teilweise in dem durch den Rungengrundkörper gebildeten Raum verlegt sein.

Der Raum liegt beispielsweise zumindest teilweise im Inneren der Eckrunge und/oder wird zumindest teilweise durch die Eckrunge begrenzt. Zum Beispiel kann es sich um einen Hohlraum im Inneren der Eckrunge handeln.

Dadurch wird erreicht, dass der Näherungsschalter und/oder die Verkabelung des Näherungsschalters vor äußeren Einflüssen (z.B. Verschmutzungen) geschützt werden.

Es versteht sich, dass die Erfindung nicht auf die vorstehend offenbarte Ausführungsform, nach der der Sensor einen Näherungsschalter umfasst, beschränkt ist. So kann der Sensor auch mehrere an dem Rungengrundkörper angeordnete Näherungsschalter umfassen. Zum Beispiel kann für jede Höhenstellung, in der die höhenverstellbare Eckrunge feststellbar ist, ein jeweiliger Näherungsschalter vorgesehen sein, wobei der jeweilige Näherungsschalter eingerichtet ist, um eine Annäherung des verschiebbaren Rungenschieblings zu erfassen, wenn sich der verschiebbare Rungenschiebling in der jeweiligen Höhenstellung befindet, und keine Annäherung des verschiebbaren Rungenschieblings zu erfassen, wenn sich der verschiebbare Rungenschiebling in einer anderen Höhenstellung befindet.

In beispielhaften Ausführungsformen umfasst das Nutzfahrzeug ferner eine Telematikeinheit umfasst, wobei die Telematikeinheit eingerichtet ist, eine durch den Sensor bereitgestellte Höhenstellungsinformation zu verarbeitet. Ferner ist der Sensor in beispielhaften Ausführungsformen eingerichtet, um eine/die Höhenstellungsinformation bereitzustellen.

Dabei soll die Höhenstellungsinformation angeben, ob der Sensor erfasst hat, dass die höhenverstellbare Eckrunge sich in der unteren Höhenstellung oder der oberen Höhenstellung befindet.

Wenn der Sensor eingerichtet ist, zu erfassen, ob die höhenverstellbare Eckrunge sich in einer ersten Höhenstellung der beiden Höhenstellungen (z.B. in der unteren Höhenstellung) befindet oder ob die die höhenverstellbare Eckrunge sich nicht in der ersten Höhenstellung der beiden Höhenstellungen (z.B. in der unteren Höhenstellung) befindet, kann die Höhenstellungsinformation eine der beiden folgende Angaben enthalten:
(i) der Sensor hat erfasst, dass die höhenverstellbare Eckrunge sich in der ersten Höhenstellung der beiden Höhenstellungen (z.B. in der unteren Höhenstellung) befindet,
(ii) der Sensor hat erfasst, dass die höhenverstellbare Eckrunge sich nicht in der ersten Höhenstellung der beiden Höhenstellungen (z.B. in der unteren Höhenstellung) befindet.

Die erste Angabe (i) wird dann so interpretiert, dass sie angibt, dass der Sensor erfasst hat, dass die höhenverstellbare Eckrunge sich in der ersten Höhenstellung der beiden Höhenstellungen (z.B. in der unteren Höhenstellung) befindet; und die zweite Angabe (ii) wird dann so interpretiert, dass sie angibt, dass der Sensor erfasst hat, dass die höhenverstellbare Eckrunge sich in der zweiten Höhenstellung der beiden Höhenstellungen (z.B. in der oberen Höhenstellung) befindet.

Wenn der Sensor dagegen derart eingerichtet ist, dass er für jede der Höhenstellungen, in der die höhenverstellbare Eckrunge feststellbar ist, erfassen kann, dass die höhenverstellbare Eckrunge sich in der jeweiligen Höhenstellung befindet, gibt die Höhenstellungsinformation beispielsweise die jeweilige Höhenstellung an, die der Sensor erfasst hat.

Die Höhenstellungsinformation kann beispielsweise durch ein oder mehrere von dem Sensor bereitgestellte analoge Signale repräsentiert werden. Ein Beispiel für ein solches analoges Signal ist ein von einem Näherungsschalter angeschaltetes (z.B. wenn eine Annäherung erfasst wird) oder ausgeschaltetes (z.B. wenn keine Annäherung erfasst wird) Spannungssignal.

Alternativ oder zusätzlich kann die die Höhenstellungsinformation über einen Bus des Nutzfahrzeugs bereitgestellt werden. Zum Beispiel wird die Höhenstellungsinformation durch ein digitales Signal, das über den Bus des Nutzfahrzeugs von dem Sensor an die Telematikeinheit übertragen wird, repräsentiert. Beispiele für einen solchen Bus des Nutzfahrzeugs sind ein CAN-, K-Leitung-, LIN- oder Flexray-Bus. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

Die Telematikeinheit des Nutzfahrzeugs ist beispielsweise eingerichtet zum Sammeln von Zustandsinformationen des Nutzfahrzeugs. Zu diesem Zweck kann die Telematikeinheit entsprechende durch Sensoren bereitgestellte Zustandsinformationen empfangen (z.B. über den Bus des Nutzfahrzeugs empfangen) und Speichern. Beispiele solcher Zustandsinformationen sind neben der Höhenstellungsinformation: Tankfüllstandinformationen, Reifeninformationen (z.B. Reifendruckwerte und/oder Reifentemperaturwerte), Feuchtigkeitsinformationen, Temperaturinformationen, Türöffnungs- und -schließinformationen und/oder Positionsinformationen.

Ferner ist die Telematikeinheit beispielsweise eingerichtet zum Verarbeiten der gesammelten Zustandsinformationen. Zum Beispiel kann die Höhenstellungsinformation durch die Telematikeinheit verarbeitet werden, um (Fahr-)Eigenschaften des Nutzfahrzeugaufbaus wie das Ladevolumen des Planenaufbaus und/oder den Windwinderstand in Abhängigkeit der Höhenstellungsinformation zu bestimmen.

Alternativ oder zusätzlich ist die Telematikeinheit zum Beispiel eingerichtet zum Senden der gesammelten und/oder verarbeiteten Zustandsinformationen an einen Server eines Telematiksystems und/oder eines Telematikdienstes. Der Server stellt beispielsweise eine Benutzeroberfläche zum Zugriff auf die Zustandsinformationen über das Internet bereit.

Weitere Vorteile der Erfindung sind der folgenden detaillierten Beschreibung einer Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung verstanden werden.

Es zeigen:
- Fig. 1: eine beispielhafte Ausführungsform eines Nutzfahrzeug mit einem erfindungsgemäßen Planenaufbau in einer perspektivischen Ansicht; und
- Fig. 2: eine beispielhafte Ausführungsform einer hinteren höhenverstellbaren Eckrunge des in Fig. 1 gezeigten Nutzfahrzeugs in einer unteren Höhenstellung; und
- Fig. 3: eine beispielhafte Ausführungsform einer hinteren höhenverstellbaren Eckrunge des in Fig. 1 gezeigten Nutzfahrzeugs in einer oberen Höhenstellung.

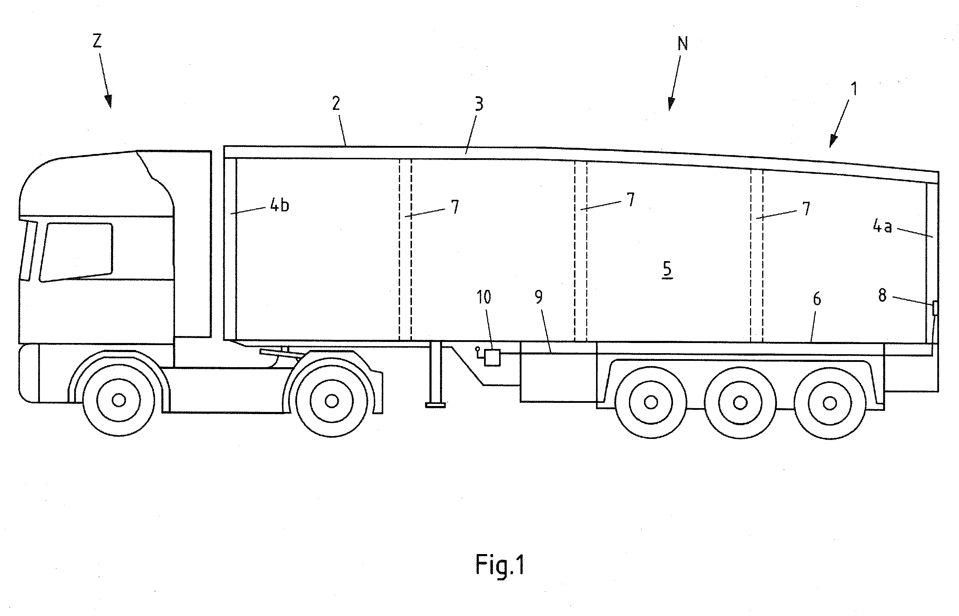

In Fig. 1 ist ein von einer Zugmaschine Z gezogenes Nutzfahrzeug N in Form eines Sattelaufliegers dargestellt. Fig. 1 zeigt eine Seitenansicht des Nutzfahrzeugs N. Das Nutzfahrzeug N weist einen Planenaufbau 1 in Form eines Curtainsider-Aufbaus auf. Der Planenaufbau 1 umfasst ein Dach 2, jeweilige an jeweils einer Längsseite des Planenaufbaus vorgesehene Längsholme 3 des Dachs 2 und Eckrungen 4 (d.h. hintere Eckrungen 4a und vordere Eckrungen 4b). Das Dach 2 ist mit einer Dachplane verschlossen. Die Dachplane 5 ist dabei Teil eines Schiebeverdecks, welches zum Öffnen des Dachs 2 zum Be- und/oder Entladen des Planenaufbaus 1 nach vorne geschoben werden kann. Dazu ist das Schiebeverdeck mit Laufrollen aufweisenden Schlitten an den Längsholmen 3 derart gehalten, dass die Laufrollen entlang von Planenlaufflächen der Längsholme 3 in Längsrichtung der Längsholme 3 abrollen können, um das Schiebeverdeck nach vorne und wieder zurück nach hinten schieben zu können.

An den Längsholmen 3 sind zudem Seitenplanen 5, die die Längsseiten verschließen, gehalten. Die Seitenplanen 5 können in der Längsrichtung des Planenaufbaus 1 nach vorne und nach hinten verschoben werden. Durch das Verschieben der Seitenplanen 5 in der Längsrichtung der Längsholme 3 können die Längsseiten des Planenaufbaus 1 zum Be- und/oder Entladen unter Freigabe des Laderaums sowie des Ladebodens des Planenaufbaus 1 geöffnet und vor der Fahrt des Nutzfahrzeugs N wieder geschlossen werden.

Die Eckrungen 4, die einerseits mit dem den Ladeboden tragenden Boden 10 des Planenaufbaus 1 verbunden sind und andererseits das Dach 2 bzw. die Längsholme 3 des Dachs 2 stützen, sind an den umlaufenden vier vertikalen Kanten des Planenaufbaus angeordnet. Zwischen den Eckrungen 4 können an den Längsseiten Mittelrungen 7 vorgesehen sein, die im Gegensatz zu den Eckrungen 4 bedarfsweise aber nicht zwingend in einer Nichtgebrauchsstellung während des Be- und Entladens des Planenaufbaus von dem Boden 6 des Planenaufbaus 1 entfernt werden können, um die Zugänglichkeit des Laderaums zum Be- und/oder Entladen zu verbessern.

Während des Transports der Ladung ist der Planenaufbau 1 geschlossen und sind die Mittelrungen 7 in einer Gebrauchsstellung angeordnet, in der die Mittelrungen das Dach 2 gegenüber dem Boden 6 abstützen.

Die Seitenplanen 5 können mit bekannten aber nicht im Einzelnen dargestellten Planenspannrohren an den Eckrungen 4 festgelegt sein, um die Seitenplanen 5 in der Längsrichtung des Planenaufbaus 1 und der Längsrichtung des jeweiligen Längsholms 3 zu spannen. An den unteren Rändern der Seitenplanen 5 können Haken vorgesehen, mit denen die Seitenplanen 5 am Boden 6 des Planenaufbaus 1 eingehakt werden können. Den Haken und den Seitenplanen 5 können zudem Spanneinrichtungen etwa in Form von Ratschen zugeordnet sein, über die die jeweils zugeordnete Seitenplane 5 über ihre Breite, also wenigstens im Wesentlichen in vertikaler Richtung, gespannt werden kann. Dabei können die Längsholme 3 so flexibel an den Eckrungen 4 festgelegt und/oder ausgebildet sein, dass sich die Längsholme 3 beim Spannen der Seitenplanen 5 über deren Breite wenigstens abschnittsweise absenken. Durch das Absenken der Längsholme 3 kann die Verbindung zwischen den Längsholmen 3 und den jeweils zugeordneten Mittelrungen 7 in die Gebrauchsstellung verstellt werden, in der ein versehentliches bzw. unerwünschtes Verschieben der Mittelrungen 7 in Längsrichtung der Längsholme 3 verhindert wird. Wird die Spannung der Seitenplane 5 in der vertikalen Richtung dagegen wieder gelöst, kann sich der zugeordnete Längsholm 3 wenigstens abschnittsweise wieder anheben, so dass die Verbindung zwischen dem Längsholm 3 und den zugehörigen Mittelrungen 7 in die Nichtgebrauchsstellung gelangt. In der Nichtgebrauchsstellung können die Mittelrungen 7 ohne weiteres entlang der zugehörigen Längsholme 3 nach vorne und nach hinten verschoben werden, um die Längsseiten für das Be- und Entladen freizugeben.

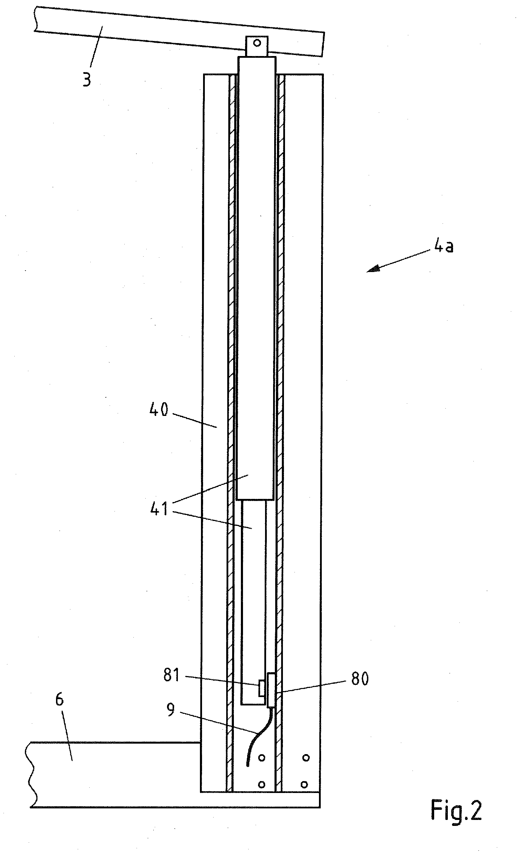

Ferner sind die hinteren Eckrungen 4a höhenverstellbar ausgebildet, um ein Absenken des hinteren Teils des Dachs 2 gegenüber dem vorderen Teil des Dachs 2 ermöglichen zu können. Zu diesem Zweck sind die hinteren Eckrungen 4a derart höhenverstellbar ausgebildet, dass sie zumindest in einer unteren Höhenstellung und in einer oberen Höhenstellung feststellbar sind. Zum Beispiel kann der hintere Teil des Dachs 2 in der unteren Höhenstellung der hinteren Eckrungen 4a um wenigsten 400mm gegenüber der oberen Höhenstellung der hinteren Eckrungen 4a und gegenüber dem vorderen Teil des Dachs 2 absenkt sein. In Fig. 2 sind die hinteren Eckrungen in der unteren Höhenstellung gezeigt, so dass der hintere Teil des Dachs 2 abgesenkt ist.

In zumindest einer der hinteren Eckrungen 4a ist ein Sensor 8 angeordnet. Es versteht sich, dass ein jeweiliger Sensor 8 auf in jeder der hinteren Eckrungen angeordnet sein kann. Im Folgenden wird jedoch angenommen, dass nur eine der hinteren Eckrungen 4a den Sensor 8 aufweist. Der Sensor 8 ist eingerichtet, um zu erfassen, ob die höhenverstellbare Eckrunge 4a, in der der Sensor 8 angeordnet ist, sich in der unteren Höhenstellung oder der oberen Höhenstellung befindet.

Der Sensor 8 ist über die Verkabelung 9 mit einer Telematikeinheit 10 des Nutzfahrzeugs N verbunden. Die Verkabelung 9 dient beispielsweise dazu, eine Busverbindung zwischen dem Sensor 8 und der Telematikeinheit 10 herzustellen, über die der Sensor 8 eine Höhenstellungsinformation bereitstellen (z.B. an die Telematikeinheit 10 senden) kann, die angibt, ob der Sensor 8 erfasst hat, dass die höhenverstellbare Eckrunge 4a, in der der Sensor 14 angeordnet ist, sich in der unteren Höhenstellung oder der oberen Höhenstellung befindet.

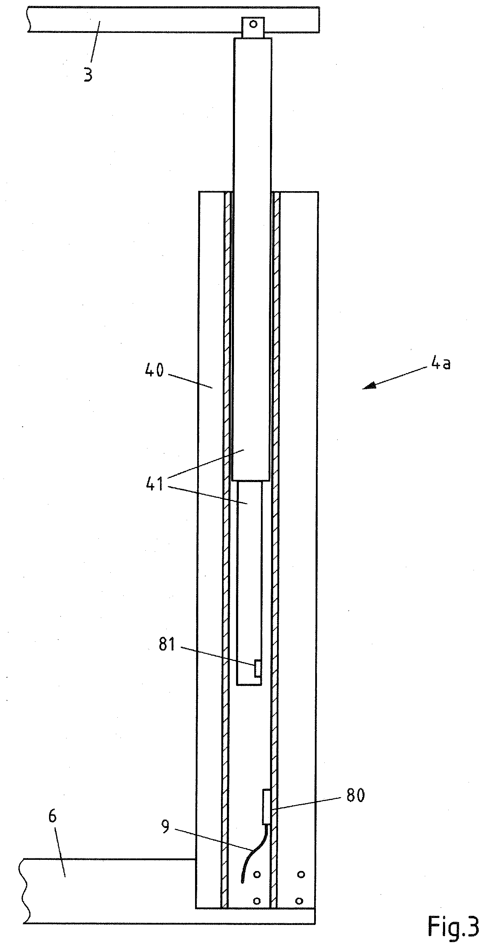

Fig. 2 zeigt eine beispielhafte Ausführungsform der hinteren höhenverstellbaren Eckrunge 4a des in Fig. 1 gezeigten Nutzfahrzeugs in der unteren Höhenstellung; und Fig. 3 zeigt diese beispielhafte Ausführungsform der hinteren höhenverstellbaren Eckrunge 4a des in Fig. 1 gezeigten Nutzfahrzeugs in der oberen Höhenstellung.

Die höhenverstellbare Eckrunge 4a weist einen Rungengrundkörper 40 und einen zumindest teilweise in dem Rungengrundkörper 40 aufgenommenen Rungenschiebling 41 auf. Das obere Ende des Rungenschieblings 41 ist mit dem Längsholm 3 des Dachs 2 verbunden; und das untere Ende des Rungengrundkörpers 40 ist mit dem Boden 6 verbunden.

Der Rungenschiebling 41 kann gegenüber dem Rungengrundkörper 40 zur Veränderung der Höhenstellung der höhenverstellbaren Eckrunge von der in Fig. 2 dargestellten unteren Höhenstellung zu der in Fig. 3 dargestellten oberen Höhenstellung nach oben verschoben werden. Der Rungenschiebling 41 ist zumindest in der unteren Höhenstellung und in der oberen Höhenstellung feststellbar, z.B. durch eine Steckbolzensicherung (nicht dargestellt). Zum Verschieben des Rungenschieblings 41 in dem Rungengrundkörper 40 kann ein manueller Bedienmechanismus (nicht dargestellt) wie ein Kurbelmechanismus oder eine hydraulische Handpumpe, vorgesehen sein.

In der beispielhaften Ausführungsform gemäß Fig. 2 und 3 umfasst der Sensor 8 einen im unteren Viertel des Rungengrundkörpers 40 angeordneten Näherungsschalter 80. Der Näherungsschalter 80 ist in einem im Inneren des Rungengrundkörpers 40 gebildeten Raum, in dem auch der Rungenschiebling 41 zumindest teilweise aufgenommen ist und die Verkabelung 9 verlegt ist, an einer ortsfesten Montageposition angeordnet (z.B. befestigt und/oder montiert). Dabei ist die ortsfeste Montageposition des Näherungsschalters 80 derart gewählt, dass (i) das untere Ende des Rungenschieblings 41 sich auf der Höhe der Montageposition des Näherungsschalters 80 befindet, wenn sich der verschiebbare Rungenschiebling 41 in der in Fig. 2 dargestellten unteren Höhenstellung befindet und (ii) das untere Ende des Rungenschieblings 41 sich oberhalb der Montageposition des Näherungsschalters 80 befindet, wenn sich der verschiebbare Rungenschiebling 41 in der in Fig. 3 dargestellten oberen Höhenstellung befindet.

Der Näherungsschalter 80 ist beispielsweise ein magnetischer Näherungsschalter, der eingerichtet ist, eine Annäherung des Rungenschieblings 41 zu erfassen, indem er das geänderte magnetische Feld aufgrund der Annäherung eines am unteren Ende des Rungenschieblings 41 angeordneten Dauermagneten 81 erfasst. In der beispielhaften Ausführungsform gemäß Fig. 2 und 3 ist der Näherungsschalter 80 eingerichtet, (i) eine Annäherung des Rungenschieblings 41 zu erfassen, wenn sich das untere Ende des Rungenschieblings 41 mit dem Dauermagneten 81 auf der Höhe der Montageposition des Näherungsschalters 80 befindet, so dass der Abstand zwischen Dauermagnet 80 und Näherungsschalter 81 kürzest möglich ist, wie in Fig 2 dargestellt, und (ii) keine Annäherung des Rungenschieblings 41 zu erfassen, wenn sich das untere Ende des Rungenschieblings mit dem Dauermagneten 81 oberhalb der Montageposition des Näherungsschalters 80 befindet, wie in Fig 3 dargestellt. Zum Beispiel bewirkt der Dauermagnet 81 ein (An-)Schalten des Näherungsschalters 80, wenn der Abstand zwischen Dauermagnet 81 und Näherungsschalter 80 kleiner als ein maximaler Erfassungsabstand ist. Zum Beispiel ist der Abstand zwischen Dauermagnet 81 und Näherungsschalter 80 in der unteren Höhenstellung kleiner als der maximale Erfassungsabstand, so dass der Näherungsschalter 80 in der unteren Höhenstellung (an-)geschaltet wird, wohingegen der Abstand zwischen Dauermagnet 81 und Näherungsschalter 80 in der oberen Höhenstellung größer als der maximale Erfassungsabstand ist, so dass der Dauermagnet 81 kein (An-)Schalten des Näherungsschalter 80 bewirkt. Der Näherungsschalter 80 kann demnach Folgendes erfassen: (i) wenn der Dauermagnet 81 ein (An-)Schalten des Näherungsschalters 80 bewirkt, die höhenverstellbare Eckrunge 4a befindet sich in der unteren Höhenstellung und (ii) wenn der Dauermagnet 81 kein (An-)Schalten des Näherungsschalters 80 bewirkt, die höhenverstellbare Eckrunge 4a befindet sich nicht in der unteren Höhenstellung. Dementsprechend kann die vom Näherungsschalter 80 bereitgestellte Höhenstellungsinformation Folgendes angeben: für den ersten Fall (i), dass der Sensor 8 erfasst hat, dass die höhenverstellbare Eckrunge 4a sich in der unteren Höhenstellung)befindet; und für den zweiten Fall (ii), dass der Sensor hat erfasst, dass die höhenverstellbare Eckrunge 4a sich nicht in der in der unteren Höhenstellung)befindet. Die erste Angabe für den Fall (i) wird dann durch die Telematikeinheit 10 so interpretiert, dass sie angibt, dass der Sensor 8 erfasst hat, dass die höhenverstellbare Eckrunge 4a sich in der unteren Höhenstellung befindet, und die zweite Angabe für den Fall (ii) wird dann durch die Telematikeinheit 10 so interpretiert, dass sie angibt, dass der Sensor 8 erfasst hat, dass die höhenverstellbare Eckrunge 4a sich in der oberen Höhenstellung befindet.

## Patentansprüche

1. Nutzfahrzeug (N) mit einem Planenaufbau (1), wobei der Planenaufbau (1) ein Dach (2), einen an einer Längsseite des Planenaufbaus (1) vorgesehenen Längsholm (3) des Dachs (2) und wenigstens eine höhenverstellbare Eckrunge (4a) umfasst, wobei die höhenverstellbare Eckrunge (4a) den Längsholm (3) des Dachs (2) abstützt und derart höhenverstellbar ausgebildet ist, dass sie wenigstens in einer unteren Höhenstellung und in einer oberen Höhenstellung feststellbar ist, und wobei in der höhenverstellbaren Eckrunge (4a) ein Sensor (8, 80, 81) angeordnet ist, der eingerichtet ist, um zu erfassen, ob die höhenverstellbare Eckrunge (4a) sich in der unteren Höhenstellung oder der oberen Höhenstellung befindet, **dadurch gekennzeichnet, dass** die höhenverstellbare Eckrunge (4a) einen Rungengrundkörper (40) und einen zumindest teilweise in dem Rungengrundkörper (40) aufgenommenen Rungenschiebling (41) umfasst, wobei der Rungenschiebling (41) gegenüber dem Rungengrundkörper (40) zur Veränderung der Höhenstellung der höhenverstellbare Eckrunge (4a) von der unteren Höhenstellung zu der oberen Höhenstellung nach oben verschiebbar ist, wobei der verschiebbare Rungenschiebling (41) zumindest in der unteren Höhenstellung und in der oberen Höhenstellung feststellbar ist, wobei der Sensor (8, 80, 81) einen am Rungengrundkörper (40) angeordneten Näherungsschalter (80) umfasst, und wobei der Näherungsschalter (80) zumindest teilweise in einem durch den Rungengrundkörper (40) gebildeten Raum angeordnet ist.

2. Nutzfahrzeug (N) gemäß Anspruch 1, wobei zumindest ein Teil des Dachs (2) in der unteren Höhenstellung der höhenverstellbaren Eckrunge (4a) um wenigstens 400mm gegenüber der oberen Höhenstellung der höhenverstellbaren Eckrunge (4a) abgesenkt ist.

3. Nutzfahrzeug (N) gemäß einem der Ansprüche 1 und 2, wobei der Rungenschiebling (41) zumindest teilweise in dem durch den Rungengrundkörper (40) gebildeten Raum, in dem der Näherungsschalter (80) angeordnet ist, aufgenommen ist.

4. Nutzfahrzeug (N) gemäß einem der Ansprüche 1 bis 3, wobei der Sensor (8, 80, 81) eingerichtet ist, um zu erfassen, ob der Rungenschiebling (41) sich in der unteren Höhenstellung oder der oberen Höhenstellung befindet.

5. Nutzfahrzeug (N) gemäß einem der Ansprüche 1 bis 4, wobei der Näherungsschalter (80)ein magnetischer oder induktiver oder kapazitiver Näherungsschalter ist.

6. Nutzfahrzeug (N) gemäß einem der Ansprüche 1 bis 5, wobei der Näherungsschalter (80) eingerichtet ist:
- eine Annäherung des verschiebbaren Rungenschieblings (41) zu erfassen, wenn sich der verschiebbare Rungenschiebling (41) in der unteren Höhenstellung befindet; und/oder
- keine Annäherung des verschiebbaren Rungenschieblings (41) zu erfassen, wenn sich der verschiebbare Rungenschiebling (41) in der oberen Höhenstellung befindet.

7. Nutzfahrzeug (N) gemäß einem der Ansprüche 1 bis 6, wobei die Länge des Rungenschieblings (41) derart gewählt ist, dass:
- das untere Ende des Rungenschieblings (41) sich auf oder unterhalb der Position des Näherungsschalters (80) befindet, wenn sich der verschiebbare Rungenschiebling (41) in der unteren Höhenstellung befindet; und/oder
- das untere Ende des Rungenschieblings (41) sich oberhalb der Position des Näherungsschalters (80) befindet, wenn sich der verschiebbare Rungenschiebling (41) in der oberen Höhenstellung befindet.

8. Nutzfahrzeug (N) gemäß einem der Ansprüche 1 bis 7, wobei der Näherungsschalter (80) in der unteren Hälfte, insbesondere dem unteren Drittel oder dem unteren Viertel, des Rungengrundkörpers (40) angeordnet ist.

9. Nutzfahrzeug (N) gemäß einem der Ansprüche 1 bis 8, wobei die Verkabelung (9) des Näherungsschalters (80) zumindest teilweise in dem durch den Rungengrundkörper (40) gebildeten Raum verlegt ist.

10. Nutzfahrzeug (N) gemäß einem der Ansprüche 1 bis 9, wobei das Nutzfahrzeug (N) ferner eine Telematikeinheit (10) umfasst, und wobei die Telematikeinheit (10) eingerichtet ist, eine durch den Sensor (8, 80, 81) bereitgestellte Höhenstellungsinformation zu verarbeiten.

11. Nutzfahrzeug (N) gemäß einem der Ansprüche 1 bis 10, wobei der Sensor (8) eingerichtet ist, um eine/die Höhenstellungsinformation bereitzustellen.

12. Nutzfahrzeug (N) gemäß einem der Ansprüche 10 und 11, wobei die Höhenstellungsinformation angibt, ob der Sensor (8) erfasst hat, dass die höhenverstellbare Eckrunge (4a) sich in der unteren Höhenstellung oder der oberen Höhenstellung befindet.

13. Nutzfahrzeug (N) gemäß einem der Ansprüche 10 bis 12, wobei die Höhenstellungsinformation über einen Bus des Nutzfahrzeugs (N) bereitgestellt wird.

## Claims

1. Utility vehicle (N) with a tarpaulin body (1), wherein the tarpaulin body (1) comprises a roof (2), a longitudinal rail (3) of the roof (2) provided on a longitudinal side of the tarpaulin body (1) and at least one height-adjustable corner stanchion (4a), wherein the height-adjustable corner stanchion (4a) supports the longitudinal rail (3) of the roof (2) and is configured height-adjustably in such a way that it is fixable at least in a lower height position and in an upper height position, and wherein a sensor (8, 80, 81) is arranged in the height-adjustable corner stanchion (4a), which is configured to detect whether the height-adjustable corner stanchion (4a) is in the lower height position or the upper height position, **characterised in that in that** the height-adjustable corner stanchion (4a) comprises a stanchion base body (40) and a stanchion slider (41) at least partially accommodated in the stanchion base body (40), wherein the stanchion slider (41) is displaceable upwards relative to the stanchion base body (40) for a change of the height position of the height-adjustable corner stanchion (4a) from the lower height position to the upper height position, wherein the displaceable stanchion slider (41) is fixable at least in the lower height position and in the upper height position, wherein the sensor (8, 80, 81) comprises a proximity switch (80) arranged on the stanchion base body (40), and wherein the proximity switch (80) is arranged at least partially in a space formed by the stanchion base body (40).

2. Utility vehicle (N) according to claim 1, wherein at least a part of the roof (2) in the lower height position of the height-adjustable corner stanchion (4a) is lowered by at least 400 mm relative to the upper height position of the height-adjustable corner stanchion (4a).

3. Utility vehicle (N) according to any one of claims 1 and 2, wherein the stanchion slider (41) is at least partially received in the space formed by the stanchion base body (40) in which the proximity switch (80) is arranged.

4. Utility vehicle (N) according to any one of claims 1 to 3, wherein the sensor (8, 80, 81) is arranged to detect whether the stanchion slider (41) is in the lower height position or the upper height position.

5. Utility vehicle (N) according to any one of claims 1 to 4, wherein the proximity switch (80) is a magnetic or inductive or capacitive proximity switch.

6. Utility vehicle (N) according to any one of claims 1 to 5, wherein the proximity switch (80) is arranged:
- to detect an approach of the displaceable stanchion slide (41) when the displaceable stanchion slide (41) is in the lower height position; and/or
- to detect no approach of the displaceable stanchion slider (41) when the sliding stanchion slider (41) is in the upper height position.

7. Utility vehicle (N) according to any one of claims 1 to 6, wherein the length of the stanchion slider (41) is selected such that:
- the lower end of the stanchion slider (41) is at or below the position of the proximity switch (80) when the displaceable stanchion slider (41) is in the lower height position; and/or
- the lower end of the stanchion slider (41) is located above the position of the proximity switch (80) when the displaceable stanchion slider (41) is in the upper height position.

8. Utility vehicle (N) according to any one of claims 1 to 7, wherein the proximity switch (80) is arranged in the lower half, in particular the lower third or the lower quarter, of the stanchion base body (40).

9. Utility vehicle (N) according to any one of claims 1 to 8, wherein the wiring (9) of the proximity switch (80) is at least partially laid in the space formed by the stanchion base body (40).

10. Utility vehicle (N) according to any one of claims 1 to 9, wherein the commercial vehicle (N) further comprises a telematics unit (10), and wherein the telematics unit (10) is configured to process altitude information provided by the sensor (8, 80, 81).

11. Commercial vehicle (N) according to any one of claims 1 to 10, wherein the sensor (8) is arranged to provide a/the height position information.

12. Utility vehicle (N) according to any one of claims 10 and 11, wherein the height position information indicates whether the sensor (8) has detected that the height-adjustable corner stanchion (4a) is in the lower height position or the upper height position.

13. Utility vehicle (N) according to any one of claims 10 to 12, wherein the height position information is provided via a bus of the commercial vehicle (N).

## Revendications

1. Véhicule utilitaire (N) avec une structure bâchée (1), où la structure bâchée (1) comprend un toit (2), un longeron (3) du toit (2) prévu sur un côté longitudinal de la structure bâchée (1) et au moins un rancher d'angle (4a) réglable en hauteur, où le rancher d'angle (4a) réglable en hauteur soutient le longeron (3) du toit (2) et est configuré à être réglable en hauteur de manière à ce qu'il est fixable au moins dans une position en hauteur inférieure et dans une position en hauteur supérieure, et où un capteur (8, 80, 81) est disposé dans le rancher d'angle (4a) réglable en hauteur, qui est configuré pour détecter si le rancher d'angle (4a) réglable en hauteur se trouve dans la position en hauteur inférieure ou dans la position en hauteur supérieure,
**caractérisé en ce que**
le rancher d'angle (4a) réglable en hauteur comprend un corps de base de rancher (40) et un coulisseau de rancher (41) logé au moins partiellement dans le corps de base de rancher (40), où le coulisseau de rancher (41) est déplaçable vers le haut par rapport au corps de base de rancher (40) pour modifier la position en hauteur du rancher d'angle (4a) réglable en hauteur de la position en hauteur inférieure à la position en hauteur supérieure, où le coulisseau de ranchers (41) déplaçable est fixable au moins dans la position en hauteur inférieure et dans la position en hauteur supérieure, où le capteur (8, 80, 81) comprend un détecteur de proximité (80) disposé sur le corps de base de ranchers (40), et où le détecteur de proximité (80) est disposé au moins partiellement dans un espace formé par le corps de base de ranchers (40).

2. Véhicule utilitaire (N) selon la revendication 1, où au moins une partie du toit (2) est abaissée d'au moins 400mm dans la position en hauteur inférieure du rancher d'angle (4a) réglable en hauteur par rapport à la position en hauteur supérieure du rancher d'angle (4a) réglable en hauteur.

3. Véhicule utilitaire (N) selon l'une des revendications 1 et 2, où le coulisseau de ranchers (41) est au moins partiellement logé dans l'espace formé par le corps de base de ranchers (40) dans lequel est disposé le détecteur de proximité (80).

4. Véhicule utilitaire (N) selon l'une des revendications 1 à 3, où le capteur (8, 80, 81) est configuré pour détecter si le coulisseau de ranchers (41) est dans la position en hauteur inférieure ou dans la position en hauteur supérieure.

5. Véhicule utilitaire (N) selon l'une des revendications 1 à 4, où le détecteur de proximité (80) est un détecteur de proximité magnétique ou inductif ou capacitif.

6. Véhicule utilitaire (N) selon l'une des revendications 1 à 5, où le détecteur de proximité (80) est configuré pour:
- détecter une approche du coulisseau de ranchers déplaçable (41) lorsque le coulisseau de ranchers déplaçable (41) se trouve dans la position en hauteur inférieure ; et/ou
- ne pas détecter d'approche du coulisseau de ranchers déplaçable (41) lorsque le coulisseau de ranchers déplaçable (41) se trouve dans la position de hauteur supérieure

7. Véhicule utilitaire (N) selon l'une des revendications 1 à 6, où la longueur du coulisseau de ranchers (41) est choisie de manière à ce que :
- l'extrémité inférieure du coulisseau de ranchers (41) se trouve sur ou en dessous de la position du détecteur de proximité (80) lorsque le coulisseau de ranchers déplaçable (41) se trouve dans la position en hauteur inférieure ; et/ou
- l'extrémité inférieure du coulisseau de ranchers (41) se trouve au-dessus de la position du détecteur de proximité (80) lorsque le coulisseau de ranchers (41) déplaçable se trouve dans la position de hauteur supérieure.

8. Véhicule utilitaire (N) selon l'une des revendications 1 à 7, où le détecteur de proximité (80) est disposé dans la moitié inférieure, notamment le tiers inférieur ou le quart inférieur, du corps de base de rancher (40).

9. Véhicule utilitaire (N) selon l'une des revendications 1 à 8, où le câblage (9) du détecteur de proximité (80) est posé au moins en partie dans l'espace formé par le corps de base de rancher (40).

10. Véhicule utilitaire (N) selon l'une des revendications 1 à 9, où le véhicule utilitaire (N) comprend en outre une unité télématique (10), et où l'unité télématique (10) est configurée pour traiter une information de position en hauteur fournie par le capteur (8, 80, 81).

11. Véhicule utilitaire (N) selon l'une des revendications 1 à 10, où le capteur (8) est configuré pour fournir une/l'information de position en hauteur.

12. Véhicule utilitaire (N) selon l'une des revendications 10 et 11, où l'information de position en hauteur indique si le capteur (8) a détecté que la rancher d'angle réglable en hauteur (4a) est dans la position en hauteur inférieure ou dans la position en hauteur supérieure.

13. Véhicule utilitaire (N) selon l'une des revendications 10 à 12, où l'information de position en hauteur est fournie par un bus du véhicule utilitaire (N).
